# EUROPÄISCHE PATENTANMELDUNG

(11) **EP 3 309 897 A1**
(43) Veröffentlichungstag der Anmeldung: **18.04.2018**
(21) Anmeldenummer: 16193550.7
(22) Anmeldetag: 12.10.2016
(51) Int. Cl.: H01P 5/107, H01Q 1/22, H01Q 21/06, H01Q 21/08

(54) **HOHLLEITEREINKOPPLUNG FÜR EINE RADARANTENNE**

(71) Anmelder: VEGA Grieshaber KG, 77709 Wolfach (DE)
(72) Erfinder: WÄLDE, Steffen, 78078 Niedereschach (DE); WEINZIERLE, Christian, 77709 Wolfach (DE)
(74) Vertreter: Maiwald Patentanwalts GmbH

(57) **Zusammenfassung**

Es wird eine Hohlleitereinkopplung (10) für eine Radarantenne (50) vorgeschlagen, welche ein mit einer Mikrostreifenleitung (12) verbundenes Strahlerelement (14) zum Aussenden und/oder Empfangen eines Radarsignals, einen Hohlleiter (16) zum Leiten des Radarsignals und ein Substrat (22) aufweist, auf welchem die Mikrostreifenleitung (12), das Strahlerelement (14) und der Hohlleiter (16) angeordnet sind. Der Hohlleiter (16) weist dabei in einem Querschnitt eine Schmalseite (18) und eine Breiteseite (20) auf, wobei die Schmalseite (18) kürzer als die Breitseite (20) ausgebildet ist. Die Mikrostreifenleitung (12) ist durch die Schmalseite (18) des Hohlleiters (16) in den Hohlleiter zu dem im Inneren des Hohlleiters angeordneten Strahlerelement (14) geführt, wobei die Mikrostreifenleitung (12) und das Strahlerelement (14) auf einer dem Hohlleiter (16) zugewandten Fläche (24) des Substrates (22) angeordnet sind.

## Beschreibung

### Gebiet der Erfindung

Die Erfindung betrifft allgemein die Füllstandmessung. Insbesondere betrifft die Erfindung eine Hohlleitereinkopplung für eine Radarantenne, die beispielsweise als Füllstandradarantenne und/oder als Zeilenscanner ausgeführt sein kann. Weiter betrifft die Erfindung eine Füllstandradarantenne mit einer entsprechenden Hohlleitereinkopplung, sowie ein Füllstandmessgerät mit einer Füllstandradarantenne.

### Hintergrund der Erfindung

Insbesondere zur Erfassung einer Oberflächentopologie einer Füllgutoberfläche von beispielsweise Schüttgütern oder bewegten Flüssigkeiten können Füllstandmessgeräte mit Füllstandradarantennen eingesetzt werden. Dabei wird häufig die Oberfläche des Füllguts mit einem Messstrahl abgetastet und so die Oberflächentopologie ermittelt. Zur Steuerung des Messstrahls kann beispielsweise ein eindimensionales Array, ein sogenannter Zeilenscanner, aus einer Vielzahl von Strahlerelementen verwendet werden, wobei das Array eine eindimensionale Abtastung der Füllgutoberfläche erlaubt. Wird dieses Array darüber hinaus rotiert, kann eine zweidimensionale Abtastung der Oberfläche erfolgen.

### Zusammenfassung der Erfindung

Es ist eine Aufgabe der Erfindung, eine Hohlleitereinkopplung für eine Radarantenne, insbesondere eine Füllstandradarantenne, bereitzustellen, mit welcher eine verbesserte Fokussierung eines ausgesendeten Radarsignals bei gleichzeitig kompakter Bauform erreicht werden kann.

Diese Aufgabe wird durch die Gegenstände der unabhängigen Patentansprüche gelöst. Weiterbildungen der Erfindung ergeben sich aus den Unteransprüchen und der nachfolgenden Beschreibung.

Ein erster Aspekt der Erfindung betrifft eine Hohlleitereinkopplung für eine Radarantenne, insbesondere eine Füllstandradarantenne. Die Hohlleitereinkopplung weist ein mit einer Mikrostreifenleitung verbundenes Strahlerelement zum Aussenden und/oder Empfangen eines Radarsignals, einen Hohlleiter zum Leiten des Radarsignals und ein Substrat, beispielsweise eine Leiterplatte, auf, auf welchem die Mikrostreifenleitung, das Strahlerelement und der Hohlleiter angeordnet sind. Dabei weist der Hohlleiter in einem Querschnitt durch den Hohlleiter eine Schmalseite und eine Breiteseite auf, wobei die Schmalseite kürzer als die Breitseite ausgebildet ist. Die Schmalseite und die Breitseite können dabei an einer Innenfläche des Hohlleiters oder an einer Außenfläche des Hohlleiters bemessen sein. Die Mikrostreifenleitung ist durch die Schmalseite des Hohlleiters in den Hohlleiter zu dem im Inneren des Hohlleiters angeordneten Strahlerelement geführt, wobei die Mikrostreifenleitung und das Strahlerelement auf einer dem Hohlleiter zugewandten Fläche des Substrates angeordnet sind. Die Fläche kann etwa eine Außenfläche, eine Seite und/oder eine Außenseite des Substrates bezeichnen.

Das Strahlerelement wird häufig als "Patch" bezeichnet und kann ein flächiges, flaches und/oder plattenförmiges Leiterelement, z.B. aus Kupfer, bezeichnen, an welchem die Mikrostreifenleitung angeordnet ist. Über die Mikrostreifenleitung kann das Radarsignal, oder allgemein ein elektromagnetisches Signal, in das Strahlerelement eingespeist werden, welches daraufhin das Radarsignal mit einer bestimmten Orientierung des Feldvektors des elektrischen Feldes des Radarsignals abstrahlt. Das abgestrahlte Radarsignal kann dann in den Hohlleiter einkoppeln und/oder überkoppeln und kann dann beispielsweise an ein Antennenelement der Radarantennen und/oder Füllstandradarantenne geleitet und abgestrahlt werden. Umgekehrt kann auch ein Radarsignal, etwa ein von einer Füllgutoberfläche reflektiertes Radarsignals, z.B. über ein Antennenelement in den Hohlleiter eingekoppelt und von dort auf das Strahlerelement übergekoppelt werden. Dieses Signal kann dann wiederum über die Mikrostreifenleitung einer Auswertelektronik zugeführt werden.

Beispielsweise für eine eindimensionale Arrayantenne, etwa einen Zeilenscanner, wird eine Mehrzahl voranstehend beschriebener Hohlleitereinkopplungen an einer Achse ausgerichtet, d.h. entlang einer geraden Linie angeordnet. Um nun mit einer Radarantenne und/oder Füllstandradarantenne eine verbesserte Fokussierung zu erreichen, kann etwa ein Durchmesser des mit der Radarantenne und/oder Füllstandradarantenne abgestrahlten Hauptstrahls bzw. der Hauptkeule verkleinert werden. Zudem kann es vorteilhaft sein, interferenzbedingt erzeugte Nebenmaxima bzw. Nebenkeulen und/oder Gitterkeulen zu vermeiden.

Durch die erfindungsgemäße Ausgestaltung der Hohlleitereinkopplung, bei welcher die Mikrostreifenleitung an der Schmalseite des Hohlleiters in den Hohlleiter eingeführt wird, kann die Hohlleitereinkopplung in kompakter Bauform realisiert werden und mehrere solche Hohlleitereinkopplungen können in einer Radarantenne und/oder Füllstandradarantenne eng aneinander angeordnet werden. Dadurch kann ein Abstand benachbarter Hohlleitereinkopplungen und/oder benachbarter Hohlleiter realisiert werden, welcher kleiner oder gleich der halben Wellenlänge des ausgesendeten Radarsignals sein kann. Damit kann ein Durchmesser der Hauptkeule reduziert, Neben- und/oder Gitterkeulen können vermieden und eine bessere Fokussierung kann erreicht werden. Zudem kann eine Verstärkung des Radarsignals erzielt werden.

Gemäß einer Ausführungsform der Erfindung ist das Innere des Hohlleiters zumindest teilweise mit einem Dielektrikum gefüllt. Dadurch kann eine Querschnittsfläche des Hohlleiters reduziert werden und eine Baugröße der Hohlleitereinkopplung kann weiter reduziert sein.

Gemäß einer Ausführungsform der Erfindung ist eine Querschnittsfläche des Hohlleiters elliptisch, oval oder rechteckig ausgestaltet. Beispielsweise kann die Querschnittsfläche ein Rechteck mit abgerundeten Ecken sein. Die Querschnittsfläche kann insbesondere die Fläche eines Innenquerschnitts des Hohlleiters bezeichnen, so dass der Hohlleiter auch z.B. einen runden Außenquerschnitt und einen elliptischen, ovalen, oder rechteckigen Innenquerschnitt aufweisen kann.

Gemäß einer Ausführungsform der Erfindung ist das Strahlerelement plattenförmig ausgebildet, z.B. flach, flächig und/oder als Patch ausgebildet. Alternativ oder ergänzend weist das Strahlerelement eine erste Ecke und eine zweite Ecke auf, wobei die erste Ecke einen kleineren Krümmungsradius als die zweite Ecke aufweist. Mit anderen Worten unterscheiden sich die erste und zwei Ecke hinsichtlich ihrer Krümmungsradien. Die erste und zweite Ecke können dabei jeweils Außenkanten des Strahlerelements bezeichnen. Die erste Ecke kann beispielsweise einen Krümmungsradius zwischen 0,2 mm und 0,3 mm, beispielsweise 0,25 mm, aufweisen. Alternativ oder ergänzend kann die zweite Ecke einen Krümmungsradius zwischen 0,5 mm und 0,6 mm, beispielsweise 0,55 mm, aufweisen. Die erste Ecke kann alternativ oder ergänzend der zweiten Ecke gegenüberliegen, d.h. die erste und zweite Ecke können sich bezüglich einer Längsrichtung des Strahlerelements gegenüberliegen. Weiter alternativ oder ergänzend kann das Strahlerelement wenigstens zwei Ecken mit identischen Krümmungsradien aufweisen. So kann etwa eine weitere Ecke vorgesehen sein, welche einen zur ersten oder zweiten Ecke identischen Krümmungsradius aufweist.

Allgemein kann durch die geometrische Ausbildung des Strahlerelements eine Richtung des elektrischen Feldvektors des von dem Strahlerelement abgestrahlten Radarsignals beeinflusst werden. Ferner soll in dem Hohlleiter die Grundmode angeregt werden, da Signale höherer Moden unterschiedliche Ausbreitungsgeschwindigkeiten aufweisen, was unter Umständen zu Messfehlern führen kann. Bei einer üblichen Hohlleitereinkopplung wird die Mikrostreifenleitung und das Strahlerelement von der Breitseite des Hohlleiters eingeführt, so dass die elektrischen Feldvektoren der Hohlleitergrundmode und des vom Strahlerelement abgestrahlten Radarsignals parallel zueinander orientiert sind. Erfindungsgemäß wird jedoch die Mikrostreifenleitung durch die Schmalseite eingeführt, so dass die elektrischen Feldvektoren nicht mehr parallel zueinander orientiert sind. Durch voranstehend erläuterte geometrische Ausgestaltung des Strahlerelements kann in vorteilhafter Weise der elektrische Feldvektor des vom Strahlerelement abgestrahlten Radarsignals derart gedreht werden, dass er parallel zum elektrischen Feldvektor der Hohlleitergrundmode orientiert ist. Dadurch kann insgesamt ein verbesserter Mikrostreifenleitung-Hohlleiter-Übergang bereitgestellt werden.

Gemäß einer Ausführungsform der Erfindung ist Bandbreitenerhöhung und/oder zur Erhöhung einer Bandbreite neben dem Strahlerelement ein Leiterelement im Inneren des Hohlleiters angeordnet. Das Leiterelement wird häufig als parasitäres Leiterelement oder parasitäres Patchelement bezeichnet. Eine Längserstreckungsrichtung des Leiterelements kann dabei quer zu einer Längserstreckungsrichtung der Mikrostreifenleitung verlaufen. Alternativ oder ergänzend können wenigstens zwei Ecken des Leiterelements unterschiedliche Krümmungsradien aufweisen. Allgemein kann mit dem Leiterelement in vorteilhafter Weise die Bandbreite des Mikrostreifenleitung-Hohlleiter-Übergangs erhöht werden.

Gemäß einer Ausführungsform der Erfindung weist der Hohlleiter an der Schmalseite eine Aussparung auf, über welche die Mikrostreifenleitung zu dem im Inneren des Hohlleiters angeordneten Strahlerelement geführt ist. Die Aussparung des Hohlleiters kann beispielsweise an einer Stirnfläche des Hohlleiters ausgebildet sein.

Ein zweiter Aspekt der Erfindung betrifft eine Füllstandradarantenne mit einer Mehrzahl von Hohlleitereinkopplungen, so wie voranstehend oder nachfolgend beschrieben. Benachbarte Strahlerelemente, insbesondere direkt und/oder unmittelbar benachbarte Strahlerelemente, der Hohlleitereinkopplungen sind dabei in einem Abstand voneinander beabstandet, welcher kleiner als die halbe Wellenlänge des Radarsignals ist. Dadurch kann eine Fokussierung der Füllstandradarantenne verbessert sein. Die höchste Frequenz des Radarsignals kann beispielsweise 81 GHz betragen. Somit würde die kleinste im Signal auftretende Wellenlänge ca. 3,7 mm betragen, so dass der maximale Abstand zwischen zwei direkt benachbarten Strahlerelementen 1,85 mm betragen kann.

Gemäß einer Ausführungsform der Erfindung sind die Strahlerelemente, die Mikrostreifenleitungen und die Hohlleiter der Mehrzahl von Hohlleitereinkopplungen auf einem gemeinsamen Substrat, insbesondere einem Leiterplattensubstrat, angeordnet. Die Füllstandradarantenne kann etwa als Parabolrinne, als Hornstrahlerarrayantenne und/oder als Arrayantenne, etwa als eindimensionale oder zweidimensionale Arrayantenne, ausgebildet sein.

Ein dritter Aspekt der Erfindung betrifft ein Füllstandmessgerät mit einer Füllstandradarantenne, so wie voranstehend und nachfolgend beschrieben. Das Füllstandmessgerät kann beispielsweise zum Bestimmen einer Topologie einer Füllgutoberfläche ausgeführt sein.

Merkmale und Elemente der Hohlleitereinkopplung, so wie voranstehend und nachfolgend beschrieben, können Merkmale und Elemente der Füllstandradarantenne und/oder des Füllstandmessgerätes, so wie voranstehend und nachfolgend beschrieben, sein. Umgekehrt können Merkmale und Elemente der Füllstandradarantenne und/oder des Füllstandmessgerätes, so wie voranstehend und nachfolgend beschrieben, Merkmale und Elemente der Hohlleitereinkopplung, so wie voranstehend und nachfolgend beschrieben, sein.

Im Folgenden werden Ausführungsbeispiele der Erfindung mit Bezug auf die beigefügten Figuren im Detail beschrieben.

### Kurze Beschreibung der Figuren

Fig. 1 zeigt ein Füllstandmessgerät gemäß einem Ausführungsbeispiel der Erfindung.
Fig. 2 zeigt eine Füllstandradarantenne gemäß einem Ausführungsbeispiel der Erfindung.
Fig. 3a zeigt eine Hohlleitereinkopplung für eine Radarantenne gemäß einem Ausführungsbeispiel.
Fig.3b zeigt ein Array aus Hohlleitereinkopplungen der Fig. 3a.
Fig.3c zeigt ein Array aus Hohlleitereinkopplungen der Fig. 3a.
Fig. 4 zeigt eine erfindungsgemäße Hohlleitereinkopplung für eine Füllstandradarantenne gemäß einem Ausführungsbeispiel der Erfindung.
Fig. 5a zeigt eine Draufsicht auf eine erfindungsgemäße Hohlleitereinkopplung für eine Füllstandradarantenne gemäß einem Ausführungsbeispiel der Erfindung.
Fig. 5b zeigt eine perspektivische Ansicht der Hohlleitereinkopplung aus Fig. 5a.
Fig. 6a zeigt eine Draufsicht auf eine erfindungsgemäße Hohlleitereinkopplung für eine Füllstandradarantenne gemäß einem Ausführungsbeispiel der Erfindung.
Fig. 6b zeigt eine perspektivische Ansicht der Hohlleitereinkopplung aus Fig. 6a.
Fig. 7a zeigt eine Draufsicht auf ein Array aus Hohlleitereinkopplungen mit Hohlleitereinkopplungen aus Fig. 6a und 6b gemäß einem Ausführungsbeispiel der Erfindung.
Fig. 7b zeigt eine perspektivische Ansicht des Arrays von Hohlleitereinkopplungen der Fig. 7a.

Die Darstellungen in den Figuren sind schematisch und nicht maßstäblich. Werden in verschiedenen Figuren die gleichen Bezugszeichen verwendet, so können diese gleiche, gleichwirkende oder ähnliche Elemente bezeichnen.

### Detaillierte Beschreibung von Ausführungsbeispielen

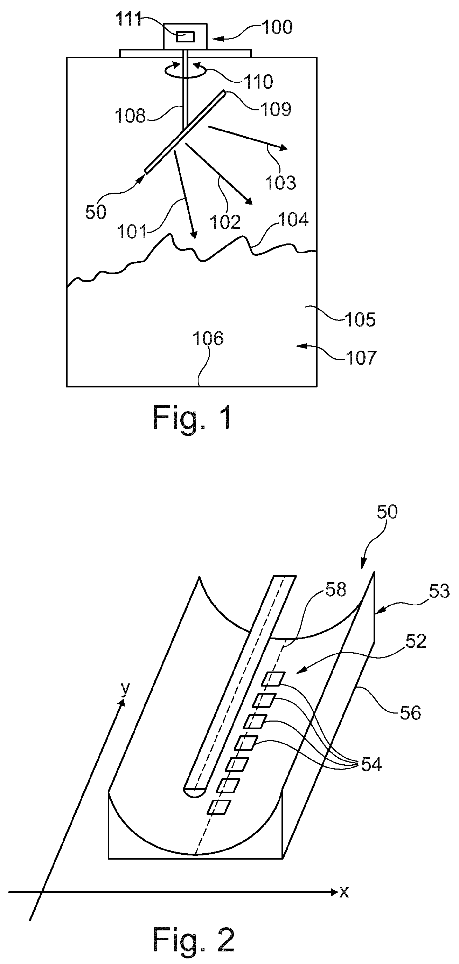

Fig. 1 zeigt ein topologieerfassendes Füllstandmessgerät 100 gemäß einem Ausführungsbeispiel der Erfindung, welches eine wie voranstehend und nachfolgend beschriebene Füllstandradarantenne 50 aufweisen kann. Das Füllstandmessgerät 100 ist in der Lage, Echosignale und/oder Echokurven aus unterschiedlichen Winkelbereichen 101, 102, 103 zu erfassen. Zu jeder erfassten Echokurve wird die Distanz zum jeweiligen Punkt der Oberfläche 104 des Füllguts oder Schüttguts 105 ermittelt. Durch numerische Integration dieser Distanzwerte und unter Postulierung einer ebenen Oberfläche 106 unter dem Schüttgut bzw. bei bekannter Behältergeometrie kann so auch das Volumen der Schüttguthalde 107 ermittelt werden. Bei bekannter Dichte lässt sich weiterhin die Masse des Schüttguts 105 berechnen.

Das Füllstandmessgerät 100 weist eine Antennenhalterung 108 zur Befestigung der Füllstandradarantenne 50 auf. Je nach Ausgestaltung des Füllstandmessgeräts 100 kann die Antennenhalterung 108 ein mechanisches Verstellen der Hauptstrahlrichtung der Füllstandradarantenne 50, beispielsweise durch Drehen 110 oder durch Verkippen, ermöglichen. Weiterhin kann das Füllstandmessgerät 100 zur Durchführung einer digitalen Strahlumformung ausgeführt sein. Das Füllstandmessgerät 100 weist hierbei eine aus mehreren Sende- und/oder Empfangselementen bestehende Füllstandradarantenne sowie eine dazu passende Auswerteeinheit 111 zur Implementierung eines Verfahrens der digitalen Strahlumformung auf.

Fig. 2 zeigt eine Radarantenne 50 und/oder Füllstandradarantenne 50 zur topologieerfassenden Füllstandmessung. Die Füllstandradarantenne 50 eine Arrayantenne 53 mit einer Antennenanordnung 52 auf. Die Antennenanordnung 52 weist dabei eine Mehrzahl von in einer Reihe 58 angeordneten Antennenelementen 54 auf, über welche jeweils ein Radarsignal abgestrahlt und/oder empfangen werden kann.

Die Arrayantenne 53 auf kann beispielsweise an einer drehbaren Halterung 108 (vgl. Fig. 1) befestigt sein kann. Die Arrayantenne 53 fokussiert die von den Antennenelementen 54 abgestrahlten und/oder empfangenen elektromagnetischen Wellen bzw. Radarsignale entlang der x-Richtung (Querrichtung). Die Fokussierung der entsprechenden Signale entlang der y-Richtung (Längsrichtung) erfolgt hingegen erst nach der Erfassung der empfangenen Signale innerhalb der Auswerteeinheit 111 (vgl. Fig. 1) durch digitale Strahlumformung. Dies ermöglicht insbesondere auch die gezielte Steuerung der Hauptempfangsrichtung der Antennenanordnung in der y-Richtung. Die Arrayantenne 53 kann beispielsweise als Parabolrinne 56 oder als Hornstrahlerarrayantenne ausgeführt sein.

Wird die Arrayantenne 53 statt mit einer drehbaren Halterung 108 mit einer statischen Halterung verbunden, kann derart ein zweidimensionales Antennenarray bereitgestellt werden, welches eine Vielzahl von Antennenelementen 54 entlang der x- und der y-Richtung verteilt aufweisen kann. Die Auswerteeinheit 111 (vgl. Fig. 1) verknüpft die von den Antennenelementen 54 empfangenen Signale gemäß dem Verfahren der zweidimensionalen digitalen Strahlumformung und kann hierbei gezielt eine Ablenkung der Hauptempfangsrichtung sowohl entlang der x- als auch entlang der y-Achse herbeiführen.

Zur Vermeidung von sogenannten Gitterkeulen bei der digitalen Strahlumformung (sog. Grating-Lobes) sollte die physikalische Distanz zwischen zwei benachbarten Antennenelementen 54 kleiner oder gleich der halben Wellenlänge der verwendeten Radarsignale sein. Diese Einschränkung führt regelmäßig zu einer hohen Zahl an Antennenelementen 54 und somit zu einem hohen Schaltungsaufwand und damit verbundenen hohen Herstellungskosten der Füllstandradarantenne 50.

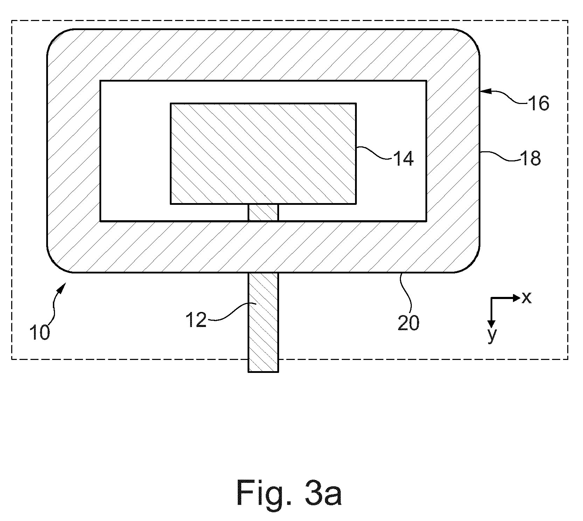

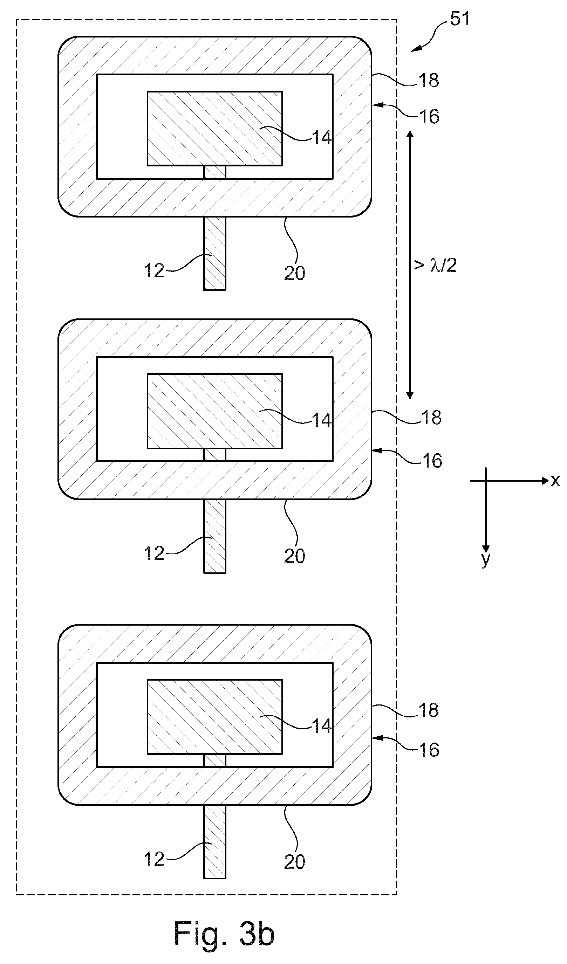

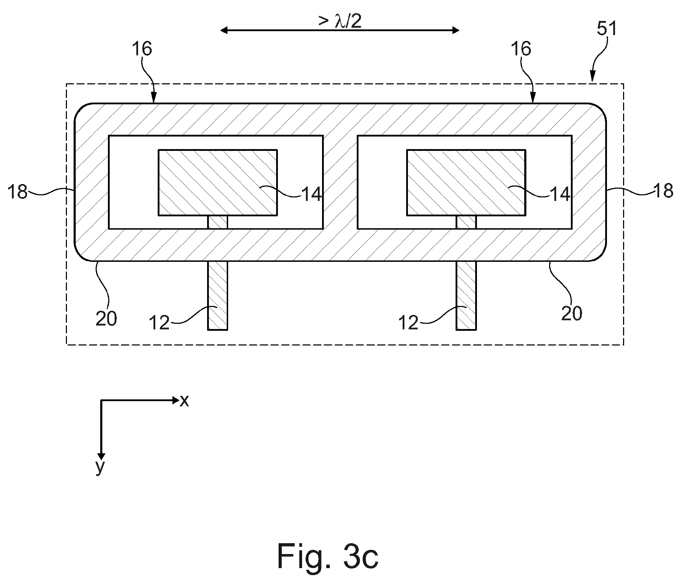

Fig. 3a zeigt eine Hohlleitereinkopplung 10 für eine Füllstandradarantenne 50 gemäß einem Ausführungsbeispiel. Fig.3b und 3c zeigen jeweils ein Array 51 aus Hohlleitereinkopplungen 10 der Fig. 3a für eine Füllstandradarantenne 50. In Fig.3b sind die Hohlleitereinkopplungen 10 in y-Richtung angeordnet. In Fig.3c sind die Hohlleitereinkopplungen in x-Richtung angeordnet. Allgemein kann das "Array 51 von Hohlleitereinkopplungen 10" eine "Anordnung 51 von Hohlleitereinkopplungen 10" bezeichnen.

Die Hohlleitereinkopplung 10 weist eine Mikrostreifenleitung 12 auf, an deren Ende ein Strahlerelement 14 angeordnet und/oder befestigt ist. Das Strahlerelement 14 wird häufig auch als abstrahlendes Element 14 oder Patchelement 14 bezeichnet. Weiter weist die Hohlleitereinkopplung 10 einen Hohlleiter 16 auf, welcher einen rechteckigen Querschnitt, optional mit abgerundeten Ecken, aufweist. Derartige Hohlleitereinkopplungen 10 werden häufig auch als Rechteckhohlleiterübergänge 10 bezeichnet. Der Hohlleiter 16 weist im Querschnitt eine Schmalseite 18 und eine Breitseite 20, welche länger als die Schmalseite 18 ausgebildet ist, auf. Ferner ist, wie in den Figuren 3a-3c ersichtlich, die Mikrostreifenleitung 12 zur bzw. an der Breitseite 20 des Hohlleiters 16 durchgeführt und dort mit dem im Inneren des Hohlleiters 16 angeordneten Strahlerelement 14 verbunden. In diesem Fall kann eine elektromagnetische Welle bzw. ein Radarsignal, welches durch die Mikrostreifenleitung 12 etwa von einem Hochfrequenz-Frontend der Füllstandradarantenne 50 in das Strahlerelement 14 eingespeist wird, in den Hohlleiter überkoppeln. Vorteilhaft erweist sich dabei, dass der Feldvektor des elektrischen Feldes des abgestrahlten Radarsignals in gleicher Richtung orientiert ist wie der elektrische Feldvektor der Grundmode des Hohlleiters 16. Die elektrischen Feldvektoren sind in diesem Fall beide in y-Richtung orientiert.

Für eine eindimensionale Arrayantenne 53 und/oder einen Zeilenscanner, sollten mehrere solcher Hohlleitereinkopplungen 10 an einer Achse 58 (vgl. Fig. 2) ausgerichtet werden und einen Abstand kleiner oder gleich der halben Wellenlänge des Radarsignals, d.h. ≤ λ/2, aufweisen, wobei λ die kleinste Wellenlänge des verwendeten Radarsignals bezeichnet (Figuren 3b, Figur 3c). Aufgrund der Mikrostreifenleitung 12, die noch aus den Hohlleitern 16 herausgeführt werden muss, kann bei dem in Figur 3b gezeigten Ausführungsbeispiel des Arrays 51 von Hohlleitereinkopplungen 10, welches in der Füllstandradarantenne 50 verbaut sein kann, kein Abstand ≤ λ/2 erreicht werden. In Fall von Figur 3c kann der Abstand ≤ λ/2 nicht erreicht werden, da die Abmessung der Breitseiten 20 der Hohlleiter 16 bereits größer als λ/2 sind.

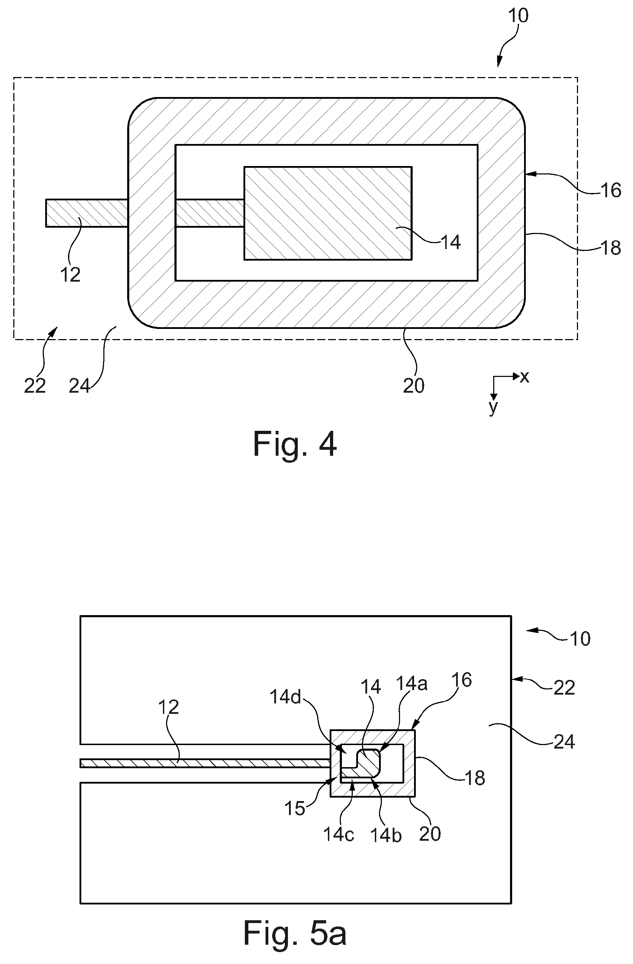

Fig. 4 zeigt eine Hohlleitereinkopplung 10 für eine Füllstandradarantenne 50 gemäß einem Ausführungsbeispiel der Erfindung. Sofern nicht anders beschrieben, weist die Hohlleitereinkopplung der Fig. 4 dieseleben Elemente und Merkmale wie in voranstehend beschriebenen Figuren auf.

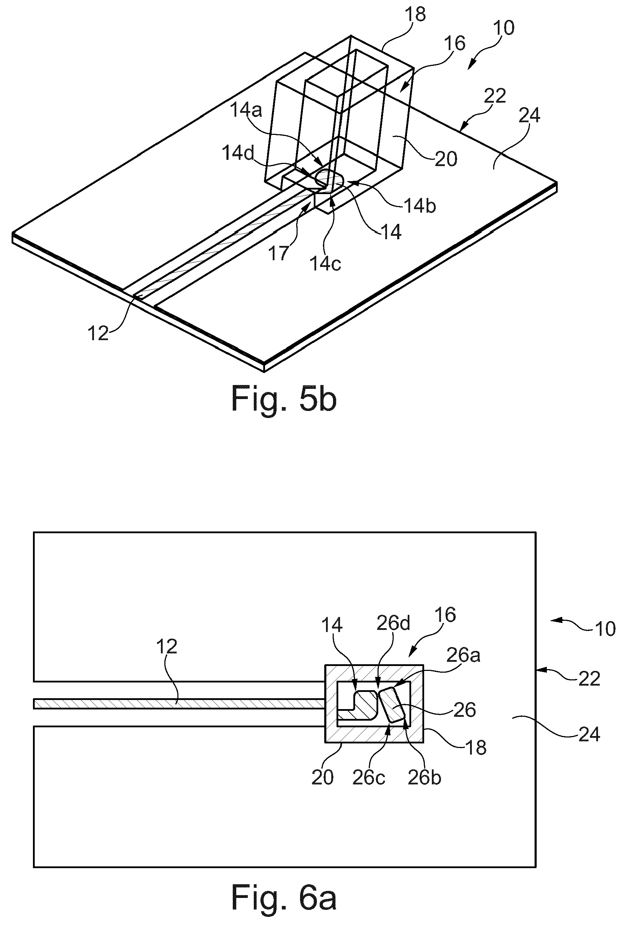

Die Mikrostreifenleitung 12, das Strahlerelement 14 und der Hohlleiter 16 sind dabei auf einem Substrat 22, etwa einer Leiterplatte 22, angeordnet, wobei die Mikrostreifenleitung 12 und das Strahlerelement 14 auf einer dem Hohlleiter 16 zugewandten Fläche 24 des Substrates 22 angeordnet und/oder befestigt sind. Die Fläche 24 kann etwa eine Außenfläche 24, eine Seite 24 und/oder eine Außenseite 24 des Substrates 22 bezeichnen. Die Fläche 24 kann beispielsweise einen Toplayer und/oder eine Oberflächenschicht des Substrates 22 bezeichnen. Das Substrat 22 selbst ist in den Figuren lediglich schematisch gezeigt. Das Substrat 22 kann weitere Schichten und/oder eine Dicke aufweisen, welche größer als eine Dicke der Mikrostreifenleitung 12 ist, wie in Fig. 5b, 6b und 7b schematisch dargestellt.

Um eine kompakte Bauform der Hohlleitereinkopplung 10 und der mit diesen ausgestatteten Füllstandradarantenne 50 bereitstellen zu können, in welcher benachbarte Hohlleitereinkopplungen 10 und/oder benachbarte Hohlleiter 16 einen Abstand zueinander aufweisen, welcher kleiner als die halbe Wellenlänge des Radarsignals (≤λ/2) ist, ist erfindungsgemäß vorgesehen, die Mikrostreifenleitung 12 zur Schmalseite 18 des Hohlleiters 16 in den Hohlleiter 16 zu führen. Ein derartiger Mikrostreifenleitung-Hohlleiterübergangs ist insbesondere für einen Zeilenscanner vorteilhaft, da durch die Realisierung eines Abstandes der Hohlleiter 16 und somit der Antennen und/oder der Hohlleitereinkopplungen 10 von ≤λ/2 das Auftreten von Gitterkeulen vermieden werden kann. Auch können so trotz des geringen Abstandes von ≤λ/2 die Strahlerelemente 14 jeweils noch mit einer Mikrostreifenleitung 12 gespeist werden.

Die technische Herausforderung bei einer Einkopplung von der Mikrostreifenleitung 12 an der Schmalseite 18 des Hohlleiters 16 ist es, das elektrische Feld des abstrahlenden Elements so zu drehen, dass die Grundmode im Hohlleiter 16 angeregt wird. In Figur 4 ist der elektrische Feldvektor, des vom Strahlerelement 14 abgestrahlten Radarsignals in x-Richtung orientiert, während der Feldvektor der Hohlleitergrundmode in y-Richtung orientiert ist. Somit steht das abgestrahlte elektrische Feld in diesem Fall um 90° verdreht zum elektrischen Feld der Grundmode des Hohlleiters 16. Eine Ausbreitung der elektromagnetischen Welle ist so zunächst nur schwer und mit einer sehr hohen Dämpfung möglich.

Fig. 5a zeigt eine Draufsicht auf eine Hohlleitereinkopplung 10 für eine Füllstandradarantenne 50 gemäß einem Ausführungsbeispiel der Erfindung. Fig. 5b zeigt eine perspektivische Ansicht der Hohlleitereinkopplung 10 aus Fig. 5a. Sofern nicht anders beschrieben, weist die Hohlleitereinkopplung 10 der Fig. 5a und 5b dieseleben Elemente und Merkmale wie in voranstehend beschriebenen Figuren auf.

Um den elektrischen Feldvektor des vom Strahlerelement 14 abgestrahlten Radarsignals zu drehen und nahezu parallel zur dem elektrischen Feldvektor der Grundmode des Hohlleiters 16 zu orientieren, ist erfindungsgemäß eine spezielle Geometrie des Strahlerelements 14 vorgesehen.

Im Wesentlichen können die Krümmungsradien der Ecken des Strahlerelements 14 und der Speisepunkt 15, an dem die Mikrostreifenleitung 12 mit dem Strahlerelement verbunden ist, dazu verwendet werden, das elektrische Feld in vorteilhafter Weise zu drehen und so die Einkopplung in den Hohlleiter 16 bzw. die Anregung der Grundmode zu optimieren.

Das Strahlerelement 14 der Fig. 5a und 5b ist plattenförmig ausgebildet und weist eine erste Ecke 14a, eine zweite Ecke 14b, eine dritte Ecke 14c und eine vierte Ecke 14d auf. Die Ecken 14a-14d können etwa Kanten 14a-14d des Strahlerelements 14 bezeichnen. Die erste Ecke 14a weist einen kleineren Krümmungsradius als die der ersten Ecke 14a gegenüberliegend angeordnete zweite Ecke 14b auf. Die vierte Ecke 14d weist einen identischen Krümmungsradius wie die zweite Ecke 14b auf. Die zweite Ecke 14b liegt dabei der vierten Ecke 15d diagonal und/oder in Diagonalrichtung des Strahlerelements 14 gegenüber. Die erste Ecke 14a kann etwa einen Krümmungsradius zwischen 0,2 mm und 0,3 mm, beispielsweise 0,25 mm, aufweisen. Die zweite Ecke 14b und die vierte Ecke 14d können jeweils einen Krümmungsradius zwischen 0,5 mm und 0,6 mm, beispielsweise 0,55 mm, aufweisen.

Die Mikrostreifenleitung 12 ist ferner an der dritten Ecke 14c, welche der ersten Ecke diagonal und/oder in Diagonalrichtung des Strahlerelements 14 gegenüberliegt mit dem Strahlerelement 14 verbunden. Gleichsam ist der Speisepunkt 15 zwischen Mikrostreifenleitung 12 und Strahlerelement 14 an der und/oder im Bereich der dritten Ecke 14c angeordnet.

Die Mikrostreifenleitung 12 ist zudem auf der Fläche 24 des Substrates 22 durch ein stirnseitig an einem Ende des Hohlleiters 16 ausgebildete Aussparung 17 des Hohlleiters 16 geführt. Die Fläche 24 kann etwa eine Außenfläche 24, eine Seite 24 und/oder eine Außenseite 24 des Substrates 22 bezeichnen.Die Fläche 24 kann beispielsweise einen Toplayer und/oder eine Oberflächenschicht des Substrates 22 bezeichnen.

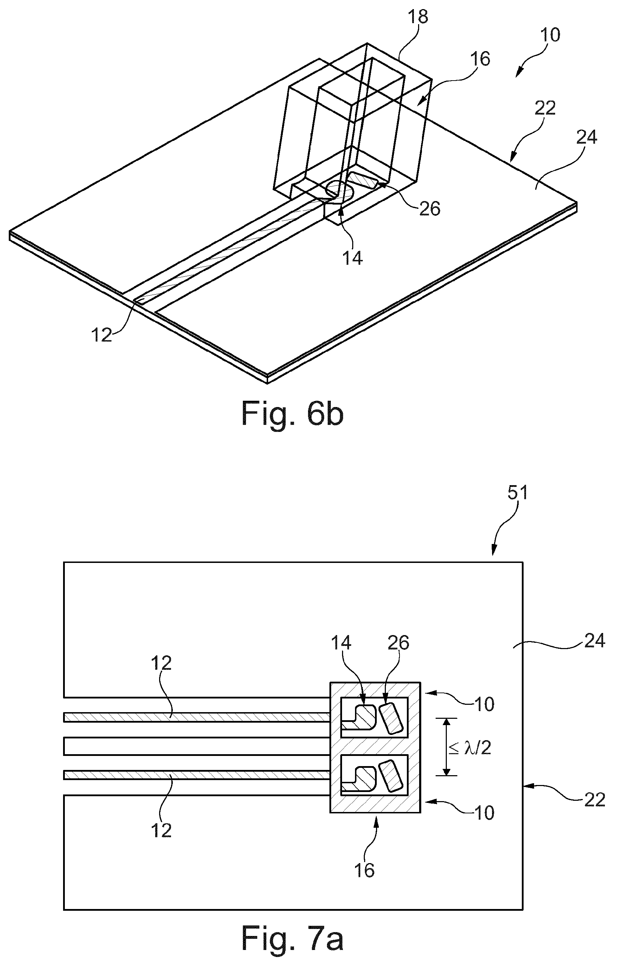

Fig. 6a zeigt eine Draufsicht auf eine Hohlleitereinkopplung 10 für eine Füllstandradarantenne 50 gemäß einem Ausführungsbeispiel der Erfindung. Fig. 6b zeigt eine perspektivische Ansicht der Hohlleitereinkopplung 10 aus Fig. 6a. Sofern nicht anders beschrieben, weist die Hohlleitereinkopplung 10 der Fig. 6a und 6b dieseleben Elemente und Merkmale wie in voranstehend beschriebenen Figuren auf.

An einer der Mikrostreifenleitung 12 gegenüberliegenden Seite des Strahlerelements 14 ist neben dem Strahlerelement 14 ein Leiterelement 26 angeordnet, welches häufig auch als parasitäres Element 26 oder parasitäres Patchelement 26 bezeichnet wird.

Das Leiterelement 26 ist plattenförmig und/oder im Wesentlichen rechteckig ausgebildet. Weiter ist das Leiterelement 26 derart auf dem Substrat 22 und/oder der Fläche 24 in dem Inneren des Hohlleiters 16 angeordnet, dass eine Längserstreckungsrichtung des Leiterelements 26 quer zur Längserstreckungsrichtung der Mikrostreifenleitung 12 orientiert ist.

Das Leiterelement weist eine erste Ecke 26a, eine zweite Ecke 26b, eine dritte Ecke 26c und eine vierte Ecke 26d auf. Die sich diagonal gegenüberliegenden Ecken 26a und 26c sowie 26b und 26d weisen dabei jeweils identische Krümmungsradien auf. Ein Krümmungsradius der ersten Ecke 26a und der dritten Ecke 26c kann zwischen 0,05 mm und 0,15 mm, beispielsweise 0,1 mm, betragen. Ein Krümmungsradius der zweiten Ecke 26a und der vierten Ecke 26c kann zwischen 0,025 mm und 0,075 mm, beispielsweise 0,05 mm, betragen.

Ferner ist das Leiterelement 26 derart angeordnet, dass die dritte Ecke 26c mehr von dem Strahlerelement 14 beabstandet ist als die vierte Ecke 26d.

Das Leiterelement 26, welches neben dem eigentlichen Strahlerelement 14 platziert ist dient der Erhöhung der Bandbreite.

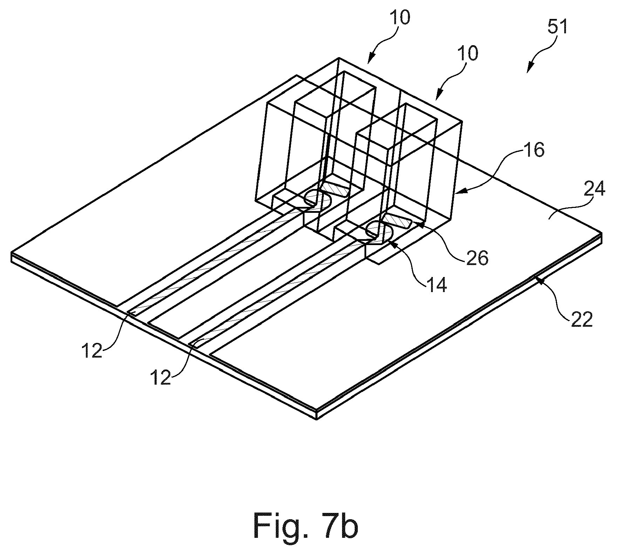

Fig. 7a zeigt eine Draufsicht auf ein Array 51 aus Hohlleitereinkopplungen 10 mit Hohlleitereinkopplungen 10 aus Fig. 6a und 6b für eine Füllstandradarantenne 50 gemäß einem Ausführungsbeispiel der Erfindung. Fig. 7b zeigt eine perspektivische Ansicht des Arrays 51 von Hohlleitereinkopplungen 10 der Fig. 7a. Sofern nicht anders beschrieben, weisen die Hohlleitereinkopplungen 10 der Fig. 7a und 7b dieseleben Elemente und Merkmale wie in voranstehend beschriebenen Figuren auf.

Das Array 51 und/oder die Anordnung von Hohlleitereinkopplungen 10 der Fig. 7a und 7b weist zwei nebeneinander angeordneten Hohlleitereinkopplungen 10 aus Fig. 6a und 6b auf. Wie gezeigt, sind die Hohlleitereinkopplungen 10 aus Fig. 6a und 6b nebeneinander mit einem Abstand ≤ λ/2 auf einem gemeinsamen Substrat 22 platziert. Auch die Mikrostreifenleitungen 12 und die Strahlerelemente 14 sind nebeneinander in einem Abstand ≤ λ/2 auf dem gemeinsamen Substrat 22 platziert. Da es sich um ein reziprokes Bauelement handelt, koppelt eine in dem Hohlleiter 16 angeregte Welle in gleichem Maße auf die Mikrostreifenleitung 12 über wie umgekehrt. Somit können diese Übergänge bzw. Hohlleitereinkopplungen 10 nicht nur zum Senden sondern auch zum Empfang eines Radarsignals genutzt werden.

Die Mikrostreifenleitungen 12 sind auf derselben Fläche 24 des Substrates 22 wie die Strahlerelemente 14 angeordnet, wobei die Fläche 24 den Hohlleitern 16 zugewandt ist. Die Fläche 24 kann etwa eine Außenfläche 24, eine Seite 24 und/oder eine Außenseite 24 des Substrates 22 bezeichnen. Die Fläche 24 kann auch etwa eine Leiterplattenlage, z.B. ein Top-Layer 24, sein. Mit anderen Worten wird erfindungsgemäß das Strahlerelement 14 nicht von der Unterseite (Bottom-Layer) durch das Substrat 22 hindurch von einer Mikrostreifenleitung 12 gespeist. Durch den hier vorgeschlagenen Übergang ergeben sich Vorteile hinsichtlich Lagenaufbau und Substrat 22, wie nachfolgend zusammengefasst. Bei hohen Frequenzen um 80 GHz werden die Substrate 22 der Leiterplatte sehr dünn (<200µm) und werden auch Hochfrequenz-Substrate (HF-Substrate) genannt. Deshalb wird die Leiterplatte bzw. das Substrat 22 zur Stabilisierung als Sandwich-Aufbau ausgeführt, indem das dünne hochfrequenztaugliche Substrat auf eine stabile Leiterplatte, beispielsweise aus FR4-Material, mit einer sogenannten Prepreg-Schicht aufgeklebt wird. Meist wird dann auf der Unterseite der FR4-Platine bzw. Leiterplatte eine weitere Platine aufgebracht, die eine ähnliche Dicke wie das HF-Substrat 22 aufweist. Dadurch wird ein symmetrischer Lagenaufbau erzielt der den Vorteil hat, bei Erwärmung nicht außer Form zu geraten.

Bei solch einem Sandwich-Aufbau ist es technologisch mit hohem Aufwand verbunden, in das HF-Substrat auf der Unterseite Strukturen einzuätzen, da diese dann erst nach der Ätzung auf den FR4-Kern geklebt werden kann. Dadurch kann ein Verzug im geätzten HF-Substrat entstehen. Vorzugsweise wird die Ätzung erst durchgeführt, nachdem der Sandwich-Aufbau zusammengeklebt ist.

Bei dem erfindungsgemäßen Aufbau kann dagegen an der Unterseite des Substrates 22 bzw. der der HF-Platine eine durchgängige Kupferfläche gebildet sein, die mit dem Massepotential verbunden sein kann und in die keine Strukturen eingeätzt werden müssen.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

## Patentansprüche

1. Hohlleitereinkopplung (10) für eine Radarantenne (50), aufweisend:
ein mit einer Mikrostreifenleitung (12) verbundenes Strahlerelement (14) zum Aussenden und/oder Empfangen eines Radarsignals;
einen Hohlleiter (16) zum Leiten des Radarsignals; und
ein Substrat (22), auf welchem die Mikrostreifenleitung (12), das Strahlerelement (14) und der Hohlleiter (16) angeordnet sind;
wobei der Hohlleiter (16) in einem Querschnitt eine Schmalseite (18) und eine Breiteseite (20) aufweist, wobei die Schmalseite (18) kürzer als die Breitseite (20) ausgebildet ist;
wobei die Mikrostreifenleitung (12) durch die Schmalseite (18) des Hohlleiters (16) in den Hohlleiter zu dem im Inneren des Hohlleiters angeordneten Strahlerelement (14) geführt ist; und
wobei die Mikrostreifenleitung (12) und das Strahlerelement (14) auf einer dem Hohlleiter (16) zugewandten Fläche (24) des Substrates (22) angeordnet sind.

2. Hohlleitereinkopplung (10) nach Anspruch 1,
wobei das Innere des Hohlleiters (16) zumindest teilweise mit einem Dielektrikum gefüllt ist.

3. Hohlleitereinkopplung (10) nach einem der Ansprüche 1 oder 2,
wobei eine Querschnittsfläche des Hohlleiters (16) elliptisch, oval oder rechteckig ausgestaltet ist.

4. Hohlleitereinkopplung (10) nach einem der voranstehenden Ansprüche,
wobei das Strahlerelement (14) plattenförmig ausgebildet ist; und/oder
wobei das Strahlerelement (14) eine erste Ecke (14a) und eine zweite Ecke (14b) aufweist, wobei die erste Ecke (14a) einen kleineren Krümmungsradius als die zweite Ecke (14b) aufweist.

5. Hohlleitereinkopplung (10) nach Anspruch 4,
wobei die erste Ecke (14a) der zweiten Ecke (14b) in Längserstreckungsrichtung des Strahlerelements (14) gegenüberliegt.

6. Hohlleitereinkopplung (10) nach einem der Ansprüche 4 oder 5,
wobei die erste Ecke (14a) einen Krümmungsradius zwischen 0,2 mm und 0,3 mm aufweist; und/oder
wobei die zweite Ecke (14b) einen Krümmungsradius zwischen 0,5 mm und 0,6 mm aufweist.

7. Hohlleitereinkopplung (10) nach einem der voranstehenden Ansprüche,
wobei wenigstens zwei Ecken (14b, 14d) des Strahlerelements (14) identische Krümmungsradien aufweisen.

8. Hohlleitereinkopplung (10) nach einem der voranstehenden Ansprüche,
wobei neben dem Strahlerelement (14) zur Bandbreitenerhöhung ein Leiterelement (26) im Inneren des Hohlleiters (16) angeordnet ist.

9. Hohlleitereinkopplung (10) nach Anspruch 8,
wobei eine Längserstreckungsrichtung des Leiterelements (26) quer zu einer Längserstreckungsrichtung der Mikrostreifenleitung (12) verläuft.

10. Hohlleitereinkopplung nach einem der Ansprüche 8 oder 9,
wobei wenigstens zwei Ecken (26a, 26b) des Leiterelements (26) unterschiedliche Krümmungsradien aufweisen.

11. Hohlleitereinkopplung (10) nach einem der voranstehenden Ansprüche,
wobei der Hohlleiter (16) an der Schmalseite (18) eine Aussparung (17) aufweist, über welche die Mikrostreifenleitung (12) zu dem im Inneren des Hohlleiters (16) angeordneten Strahlerelement (14) geführt ist.

12. Füllstandradarantenne (50) mit einer Mehrzahl von Hohlleitereinkopplungen (10) nach einem der voranstehenden Ansprüche;
wobei benachbarte Strahlerelemente (14) der Hohlleitereinkopplungen (10) in einem Abstand voneinander beabstandet sind, welcher kleiner als die halbe Wellenlänge des Radarsignals ist.

13. Füllstandradarantenne (50) nach Anspruch 12,
wobei die Strahlerelemente (14), die Mikrostreifenleitungen (12) und die Hohlleiter (16) der Mehrzahl von Hohlleitereinkopplungen (10) auf einem gemeinsamen Substrat (22) angeordnet sind.

14. Füllstandradarantenne (50) nach einem der Ansprüche 12 oder 13, ausgeführt als Parabolrinne (56), als Hornstrahlerarrayantenne und/oder als Arrayantenne (53).

15. Füllstandmessgerät (100) mit einer Füllstandradarantenne (50) nach einem der Ansprüche 12 bis 14.

## Geänderte Patentansprüche

### Geänderte Patentansprüche gemäss Regel 137(2) EPÜ.

1. Füllstandradarantenne (50), welche eine Mehrzahl von Hohlleitereinkopplungen (10) aufweist,
wobei jede Hohlleitereinkopplung (10) ein mit einer Mikrostreifenleitung (12) verbundenes Strahlerelement (14) zum Aussenden und/oder Empfangen eines Radarsignals und einen Hohlleiter (16) zum Leiten des Radarsignals aufweist;
wobei die Füllstandradarantenne ein Substrat (22) aufweist, auf welchem die Mikrostreifenleitungen (12), die Strahlerelemente (14) und die Hohlleiter (16) angeordnet sind;
wobei jeder Hohlleiter (16) in einem Querschnitt eine Schmalseite (18) und eine Breiteseite (20) aufweist, wobei die Schmalseite (18) kürzer als die Breitseite (20) ausgebildet ist;
wobei die Mikrostreifenleitungen (12) jeweils durch die Schmalseite (18) des Hohlleiters (16) in den Hohlleiter zu dem im Inneren des Hohlleiters angeordneten Strahlerelement (14) geführt sind;
wobei die Mikrostreifenleitungen (12) und die Strahlerelemente (14) auf einer den Hohlleitern (16) zugewandten Fläche (24) des Substrates (22) angeordnet sind; und
wobei benachbarte Strahlerelemente (14) der Hohlleitereinkopplungen (10) in einem Abstand voneinander beabstandet sind, welcher kleiner oder gleich der halben Wellenlänge des Radarsignals ist.

2. Füllstandradarantenne (50) nach Anspruch 1,
wobei das Innere der Hohlleiter (16) zumindest teilweise mit einem Dielektrikum gefüllt ist.

3. Füllstandradarantenne (50) nach einem der Ansprüche 1 oder 2,
wobei eine Querschnittsfläche der Hohlleiter (16) elliptisch, oval oder rechteckig ausgestaltet ist.

4. Füllstandradarantenne (50) nach einem der voranstehenden Ansprüche,
wobei die Strahlerelemente (14) plattenförmig ausgebildet sind; und/oder
wobei jedes Strahlerelement (14) eine erste Ecke (14a) und eine zweite Ecke (14b) aufweist, wobei die erste Ecke (14a) einen kleineren Krümmungsradius als die zweite Ecke (14b) aufweist.

5. Füllstandradarantenne (50) nach Anspruch 4,
wobei die erste Ecke (14a) der zweiten Ecke (14b) in Längserstreckungsrichtung des Strahlerelements (14) gegenüberliegt.

6. Füllstandradarantenne (50) nach einem der Ansprüche 4 oder 5,
wobei die erste Ecke (14a) einen Krümmungsradius zwischen 0,2 mm und 0,3 mm aufweist; und/oder
wobei die zweite Ecke (14b) einen Krümmungsradius zwischen 0,5 mm und 0,6 mm aufweist.

7. Füllstandradarantenne (50) nach einem der voranstehenden Ansprüche,
wobei wenigstens zwei Ecken (14b, 14d) jedes Strahlerelements (14) identische Krümmungsradien aufweisen.

8. Füllstandradarantenne (50) nach einem der voranstehenden Ansprüche,
wobei neben jedem Strahlerelement (14) zur Bandbreitenerhöhung ein Leiterelement (26) im Inneren des Hohlleiters (16) angeordnet ist.

9. Füllstandradarantenne (50) nach Anspruch 8,
wobei eine Längserstreckungsrichtung jedes Leiterelements (26) quer zu einer Längserstreckungsrichtung der Mikrostreifenleitung (12) verläuft.

10. Füllstandradarantenne (50) nach einem der Ansprüche 8 oder 9,
wobei wenigstens zwei Ecken (26a, 26b) jedes Leiterelements (26) unterschiedliche Krümmungsradien aufweisen.

11. Füllstandradarantenne (50) nach einem der voranstehenden Ansprüche,
wobei jeder Hohlleiter (16) an der Schmalseite (18) eine Aussparung (17) aufweist, über welche die Mikrostreifenleitung (12) zu dem im Inneren des jeweiligen Hohlleiters (16) angeordneten Strahlerelements (14) geführt ist.

12. Füllstandradarantenne (50) nach einem der voranstehenden Ansprüche,
wobei die Strahlerelemente (14), die Mikrostreifenleitungen (12) und die Hohlleiter (16) der Mehrzahl von Hohlleitereinkopplungen (10) auf einem gemeinsamen Substrat (22) angeordnet sind.

13. Füllstandradarantenne (50) nach einem der voranstehenden Ansprüche, ausgeführt als Parabolrinne (56), als Hornstrahlerarrayantenne und/oder als Arrayantenne (53).

14. Füllstandmessgerät (100) mit einer Füllstandradarantenne (50) nach einem der voranstehenden Ansprüche.
